# EUROPÄISCHE PATENTSCHRIFT

(11) **EP 4 223 133 B1**
(45) Veröffentlichungstag und Bekanntmachung des Hinweises auf die Patenterteilung: **11.12.2024**
(21) Anmeldenummer: 23152279.8
(22) Anmeldetag: 18.01.2023
(51) Int. Cl.: A23G 9/12, A23G 9/28

(54) **VORRICHTUNG ZUR HERSTELLUNG EINES FLIESSFÄHIGEN PRODUKTES**
DEVICE FOR PRODUCING A FLUID PRODUCT
DISPOSITIF POUR LA FABRICATION D'UN PRODUIT FLUIDE

(30) Priorität: 01.02.2022 DE 102022102268
(43) Veröffentlichungstag der Anmeldung: 09.08.2023
(73) Patentinhaber: Kälte-Rudi GmbH & Co. KG, 75210 Keltern (DE)
(72) Erfinder: Rischewski, Marc, 75210 Keltern (DE)
(74) Vertreter: Wacker, Jost Oliver

(56) Entgegenhaltungen:
- DE-T2- 69 202 987
- US-A- 4 364 666

## Beschreibung

Die Erfindung betrifft eine Vorrichtung zur Herstellung eines fließfähigen Produktes, wie insbesondere von Speiseeis, Eiscreme oder eines sonstigen cremigen Produktes aus einem Ausgangsgemisch nach dem Oberbegriff des Anspruchs 1. Diese Vorrichtung umfasst einen in einem Vorrichtungsgehäuse vorgesehenen Verarbeitungsbehälter mit einer temperierbaren Innenwandung, die einen zur Aufnahme des Ausgangsgemisches geeigneten Innenraum umschließt. Die Innenwandung ist dabei zum Erwärmen oder Kühlen des Ausgangsgemisches geeignet. Zudem ist in dem über eine Behälteröffnung zugänglichen Innenraum eine Rühreinrichtung zum Verrühren und Durchmischen des Ausgangsgemisches beziehungsweise des Produktes vorgesehen. Um einen Zugang zum Innenraum für eine vollständige Entnahme des Produktes aus dem Verarbeitungsbehälter und dessen Reinigung zu ermöglichen oder aber den Innenraum während des Herstellungsprozesses abdichtend verschließen zu können, umfasst die Vorrichtung eine an dem Vorrichtungsgehäuse verlagerbar gehaltene Behältertür. Diese ist zwischen einer Schließposition, in welcher die Behälteröffnung durch die Behältertür flüssigkeitsdicht verschlossen ist, und einer Öffnungsposition verschwenkbar, in welcher der Innenraum über die Behälteröffnung zugänglich ist. Die Vorrichtung umfasst zudem eine Verriegelungseinrichtung, die zwischen einer Verriegelungsstellung, in welcher die Behältertür mittels der Verriegelungseinrichtung in der Schließposition positionsfest fixiert ist, und einer Freigabestellung verstellbar ist, in welcher die Behältertür in eine zur Behälteröffnung beabstandete Öffnungsposition verschwenkbar ist.

Vorrichtungen der vorgenannten Art dienen in erster Linie dazu, dass ein beispielsweise flüssiges Ausgangsgemisch, insbesondere mit den Bestandteilen Wasser, Milch, Sahne, Joghurt, Verdickungsmittel, Fruchtstücken, Fruchtkonzentrat, Gewürzen und/oder sonstigen geschmackgebenden Bestandteilen, wie Zucker, Vanille, Schokolade und sonstige bekannte und geeignete Bestandteile von Nahrungsmitteln, solange mittels der Rühreinrichtung umgerührt wird, bis bei gleichzeitiger Temperierung ein fließfähiges, viskoses Produkt, wie insbesondere Speiseeis, Eiscreme oder eine sonstige Creme entsteht. Ein wesentlicher Bestandteil der Vorrichtungen ist dabei die Behältertür, die während eines jeweiligen Herstellungsprozesses an der Behälteröffnung anliegt und den Innenraum des Verarbeitungsbehälters zumindest für das Produkt undurchlässig abdichtet und die für einen Zugang zum Innenraum geöffnet werden kann.

Aus der DE 692 02 987 T2 ist beispielsweise eine Vorrichtung zur Herstellung eines fließfähigen Produktes bekannt, die einen Verarbeitungsbehälter aufweist, der innerhalb eines Vorrichtungsgehäuses aufgenommen ist. Eine Behältertür ist dabei über ein Scharnier an der Außenseite des Vorrichtungsgehäuses verschwenkbar gelagert. Zudem ist eine gewindeförmige Verriegelungseinrichtung vorgesehen, um die Behältertür in einer die Behälteröffnung abdichtenden Schließposition verriegeln zu können. Die Verriegelungseinrichtung ist dabei zwischen einer Verriegelungsstellung, in der die Behältertür an der Behälteröffnung klemmend fixiert ist, und einer Freigabestellung verstellbar, in der die Behältertür entlang ihrer horizontalen Schwenkebene frei verschwenkt werden kann.

Nach einem Herstellungsprozess ist bei derartigen Vorrichtungen eine gründliche Reinigung notwendig, um eine Kontamination von nachgelagerten Produktchargen zu vermeiden. Zudem ist insbesondere bei längeren Standzeiten nach der Reinigung eine Belüftung des Verarbeitungsbehälters erforderlich, um durch die Luftzufuhr auch Restfeuchte durch Verdunstung aus dem Verarbeitungsbehälter entfernen zu können.

Nachteilig an der bekannten Vorrichtung ist dabei, dass die Verriegelungseinrichtung zu Reinigungs- und Belüftungszwecken nur in die Freigabestellung verbracht werden kann, in der die Behältertür frei verschwenkbar ist. Dadurch besteht einerseits die Gefahr, dass die Behältertür versehentlich zufällt und es, insbesondere bei längeren Standzeiten und einer verbliebenen Restfeuchte im Verarbeitungsbehälter, aufgrund mangelnder Luftzufuhr zu Schimmelbildung kommt. Andererseits besteht die Gefahr, dass die Behältertür in eine Offenstellung verschwenkt wird, in der sie so weit in einen Arbeitsbereich vor der Vorrichtung ragt, dass es zu Behinderungen oder gar zu Verletzungen von Personen kommen kann, die in diesem Arbeitsbereich tätig sind.

Die Aufgabe der Erfindung ist es, bei einer gattungsgemäßen Vorrichtung die genannten Nachteile zu vermeiden, und eine vollständige Reinigung und Belüftung des Verarbeitungsbehälters zu gewährleisten sowie Behinderungen oder gar Verletzungen durch die Behältertür zu vermeiden.

Diese Aufgabe wird durch eine Vorrichtung mit den Merkmalen des Anspruchs 1 gelöst. Dabei ist vorgesehen, dass die Verriegelungseinrichtung zusätzlich zur Verriegelungsstellung und Freigabestellung in eine Lüftungsstellung verstellt werden kann. In dieser Lüftungsstellung ist die Behältertür mittels der Verriegelungseinrichtung beabstandet gegenüber der Behälteröffnung in einer vorbestimmten Lüftungsposition gehalten, wodurch ein Lüftungsschlitz zur ausreichenden Belüftung des Innenraums des Verarbeitungsbehälters freigegeben ist. Durch die Lüftungsstellung der Verriegelungseinrichtung kann die Auslenkung der schwenkbaren Behältertür gegenüber der Behälteröffnung begrenzt werden, um eine Behinderung oder Verletzungsgefahr in Folge der vom Verarbeitungsbehälter beabstandeten Behältertür zu vermeiden beziehungsweise zu reduzieren. Darüber hinaus kann durch die Lüftungsstellung der Verriegelungseinrichtung die Lüftungsposition der Behältertür so vorbestimmt werden, dass ein Lüftungsschlitz gebildet wird, der eine vorbestimmte Größe aufweist, durch die eine ausreichende Belüftung des Innenraums gewährleistet ist, so dass eine noch vorhandene Restfeuchtigkeit verdunsten kann und eine Schimmelbildung im Verarbeitungsbehälter auch bei längeren Standzeiten vermieden wird.

In einer bevorzugten Ausgestaltung der Vorrichtung ist vorgesehen, dass der Lüftungsschlitz in der Lüftungsposition der Behältertür an seiner breitesten Stelle eine maximale Breite zwischen 2 cm und 20 cm aufweist. Durch die Anordnung der Behältertür in einem entsprechenden Abstand gegenüber der Behälteröffnung kann ein zur Entfernung von Restfeuchte ausreichender Luftaustausch gewährleistet werden, während gleichzeitig die Gefahr einer Behinderung im Arbeitsbereich vor der Vorrichtung durch die abstehende Behältertür minimiert ist.

In einer vorteilhaften Ausführungsform weist die Verriegelungseinrichtung ein verstellbares Stellglied auf, mittels dem in der Verriegelungsstellung unter Zwischenlage der Behältertür eine in Richtung des Vorrichtungsgehäuses wirkende Klemmkraft aufbringbar ist. In der Freigabestellung ist das Stellglied aus einem Schwenkbereich der Behältertür entfernt, um ein freies Verschwenken der Behältertür zu ermögliche. Und in der Lüftungsstellung kann mittels des Stellgliedes ein Lüftungsanschlag ausgebildet werden, der zur beabstandeten Anordnung der Behältertür gegenüber der Behälteröffnung in der Lüftungsposition dient. Hierdurch kann der Benutzer die jeweils gewünschte Position der Behältertür relativ zur Behälteröffnung schnell und einfach einstellen, um zwischen der Schließ-, Öffnungs- und Lüftungsposition der Behältertür wechseln zu können.

Zudem ist es vorzugsweise vorgesehen, dass das Stellglied mittels einer mit ihm wirkverbundenen Handhabe betätigt werden kann und dabei um eine im Wesentlichen horizontal gerichtete Stellachse verschwenkbar ist. Dadurch kann die Handhabe insbesondere vertikal verlagerbar sein, um sie platzsparend betätigen zu können, so dass die Vorrichtung auch bei beengten Platzverhältnissen verwendet werden kann.

In einer besonders vorteilhaften Ausführungsform weist das Stellglied einen um wenigstens 180° verschwenkbaren Exzenterabschnitt mit einem ersten Kontaktbereich und einen vom ersten Kontaktbereich abgewandten zweiten Kontaktbereich auf, wobei in der Verriegelungsstellung der erste Kontaktbereich und in der Lüftungsstellung der zweite Kontaktbereich mit der Behältertür in Anlage bringbar ist. Auf diese Weise kann mittels eines einzelnen Stellgliedes die Behältertür wahlweise an der Behälteröffnung fixiert oder unter Ausbildung eines Lüftungsschlitzes gegenüber der Behälteröffnung beabstandet gehalten werden.

Vorteilhafterweise ist der erste Kontaktbereich und/oder der zweite Kontaktbereich wenigstens abschnittsweise aus einem Kunststoffmaterial, wie insbesondere einem elastomeren Kunststoff, gebildet. Hierdurch kann bei Kontakt zwischen dem Stellglied und der vorzugsweise metallischen Behältertür eine Beschädigung beziehungsweise die Ausbildung von Kratzspuren verhindert werden. Zudem kann durch den elastomeren Kunststoff in der Schließstellung eine Vorspannung und damit die Klemmkraft in Richtung des Verarbeitungsbehälters erzeugt werden, die ein dichtes Verschließen der Behälteröffnung durch die Behältertür ermöglicht.

Ferner ist es günstig, wenn die Behältertür in der Schließposition durch eine permanente Öffnungskraft von der Behälteröffnung weg beaufschlagt ist, wodurch die Behältertür aus der Schließposition selbsttätig in die Lüftungsposition beziehungsweise in die Öffnungsposition verlagert wird, sobald die Verriegelungseinrichtung von der Verriegelungsstellung in die Lüftungsstellung beziehungsweise in die Freigabestellung verbracht wird.

In einer besonders bevorzugten Ausführungsform erstreckt sich der Verarbeitungsbehälter von der Behälteröffnung weg entgegen der Gravitationsrichtung in einem Anstellwinkel schräg nach oben und die Behältertür ist an dem Vorrichtungsgehäuse mittels eines Scharnierelements verschwenkbar gelagert, das eine Schwenkachse definiert, die im Wesentlichen senkrecht zum Anstellwinkel und somit ebenfalls schräg gerichtet ist. Dadurch ist die Behältertür in der Schließposition durch die vom Eigengewicht erzeugte Resultierende der Schwerkraft von der Behältertür weg beaufschlagt, so dass die in Schwenkrichtung wirkende Resultierende der Schwerkraft der Behältertür als Öffnungskraft fungiert. Hierdurch sind keinerlei zusätzliche Mittel zur Erzeugung der Öffnungskraft erforderlich. Zudem kann auf diese Weise ein sich im Verarbeitungsbehälter befindliches Produkt oder Reinigungsmittel im Vergleich zu einem horizontal ausgerichteten Aufnahmeboden in Richtung der Behälteröffnung besser ausfließen und einfacher entnommen werden. Dabei erstreckt sich der Verarbeitungsbehälter vorzugsweise in einem Winkel zwischen 20° bis 50° gegenüber der Horizontalen.

Alternativ oder zusätzlich hierzu ist die Öffnungskraft durch eine Federkraft einer Federeinrichtung gebildet, die zwischen der Behältertür und dem Vorrichtungsgehäuse wirkt und die Behältertür in die Öffnungsposition beziehungsweise in die Lüftungsposition vorspannt. Hierdurch kann die Öffnungskraft besonders einfach und platzsparend erzeugt werden, wie beispielsweise durch eine am Scharnier angeordnete Federeinrichtung.

In einer weiteren vorteilhaften Ausführungsform ist das Stellglied mittels einer elektrischen Stelleinrichtung zwischen der Verriegelungsstellung, der Freigabestellung und der Lüftungsstellung verstellbar. Auf diese Weise kann das Stellglied von einem Benutzer in komfortabler Weise und ohne größeren Kraftaufwand einfach und schnell verstellt werden. Zudem kann das Stellglied auf diese Weise auch teil- oder vollautomatisch verstellt werden.

Zudem ist es günstig, wenn auch die Behältertür mittels einer elektrischen Schwenkeinrichtung zwischen der Schließposition und der Öffnungsposition verstellbar ist. Auf diese Weise kann die Behältertür entlang ihrer Schwenkachse und ohne eine aufwändige Betätigung durch einen Benutzer in Abstimmung zur Verriegelungseinrichtung verschwenkt und in eine vordefinierte Position gebracht werden, wie insbesondere teil- oder vollautomatisch.

Vorteilhafterweise ist wenigstens eine der beiden elektrischen Einrichtungen mittels eines damit verbundenen Bedienfeldes am Vorrichtungsgehäuse verstellbar, wodurch eine besonders einfache und komfortable Steuerung der Behältertür und der Verriegelungseinrichtung durch einen Benutzer der Vorrichtung erfolgen kann. Zudem ist dabei vorzugsweise vorgesehen, dass das Bedienfeld mit einem Speichermedium mit einer Rechnereinheit gekoppelt ist, wodurch besagter Benutzer aus mehreren voreingestellten Einstellungen und/oder Verläufen für verschiedene Anwendungen auswählen kann. Dadurch können beispielsweise verschiedene Verweildauern der Verriegelungseinrichtung in der Verriegelungs-, Lüftungs- oder Öffnungsstellung voreingestellt und ausgewählt werden.

Ferner ist es günstig, dass zwischen der Behältertür und dem Vorrichtungsgehäuse wenigstens eine Sicherheitssensorik, insbesondere mit einem taktilen oder optischen Sensor, angeordnet ist. Somit kann ein zwischen Behältertür und Behälteröffnung angeordnetes Körperteil, wie insbesondere ein Finger oder eine Hand, oder ein sonstiges Objekt erkannt werden, um insbesondere beim Schließen der Behältertür Verletzungen oder Beschädigungen der Vorrichtung zu vermeiden.

In einer besonders vorteilhaften Ausführungsform ist wenigstens eine der beiden elektrischen Einrichtungen in Abhängigkeit eines Signals der Sicherheitssensorik, wie insbesondere bei einem detektierten Objekt zwischen Behältertür und Vorrichtungsgehäuse, selbsttätig blockierbar. Hierdurch kann insbesondere ein Schließvorgang blockiert werden, um Verletzungen oder Beschädigungen zu vermeiden.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

Weitere Vorteile und Merkmale der Erfindung ergeben sich aus den Ansprüchen und der nachfolgenden Figurenbeschreibung, in der Ausführungsbeispiele der Erfindung unter Bezugnahme auf die Zeichnungen im Einzelnen erläutert sind. In den Figuren ist eine beispielhafte Ausführungsform der Erfindung dargestellt. Es zeigen:
- Figur 1: eine Frontansicht einer erfindungsgemäßen Vorrichtung,
- Figur 2: eine Seitenansicht der Vorrichtung nach Figur 1,
- Figur 3: eine perspektivische Ansicht einer Verriegelungseinrichtung der Vorrichtung nach Figur 1,
- Figur 4: eine perspektivische Ansicht der Vorrichtung nach Fig. 1 mit der Verriegelungseinrichtung in einer Verriegelungsstellung,
- Figur 5: eine perspektivische Ansicht der Vorrichtung nach Fig. 1 mit der Verriegelungseinrichtung in einer Lüftungsstellung,
- Figur 6: eine perspektivische Ansicht der Vorrichtung nach Fig. 1 mit der Verriegelungseinrichtung in einer Freigabestellung,
- Figur 7: eine Frontansicht einer alternativen Ausführungsform der Vorrichtung mit einem sich horizontal erstreckenden Verarbeitungsbehälter und
- Figur 8: die Frontansicht einer weiteren alternativen Ausführungsform Vorrichtung nach Fig. 1 mit Sicherheitssensoren und elektrischen Stelleinrichtungen.

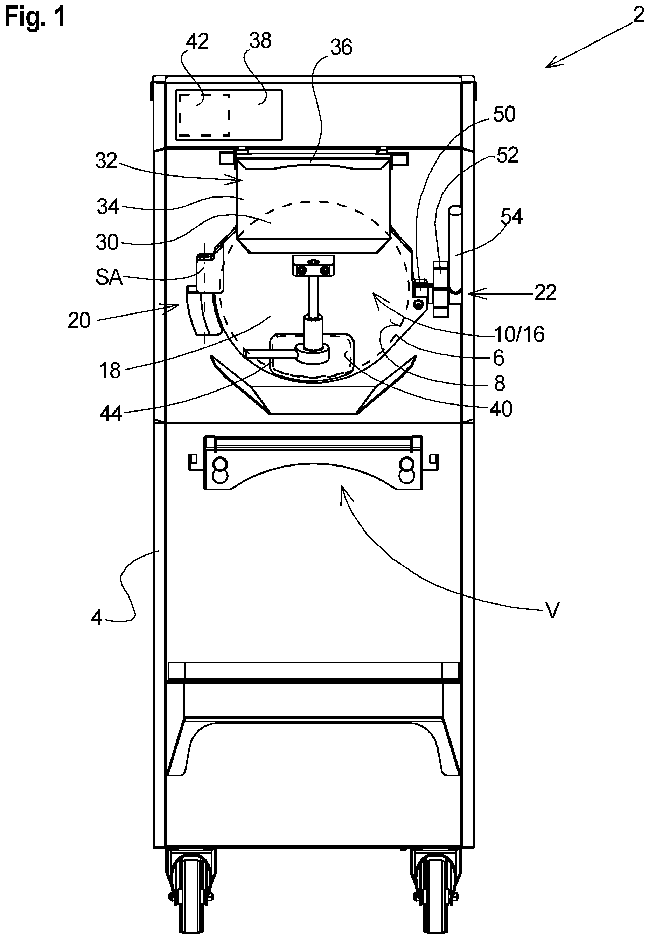

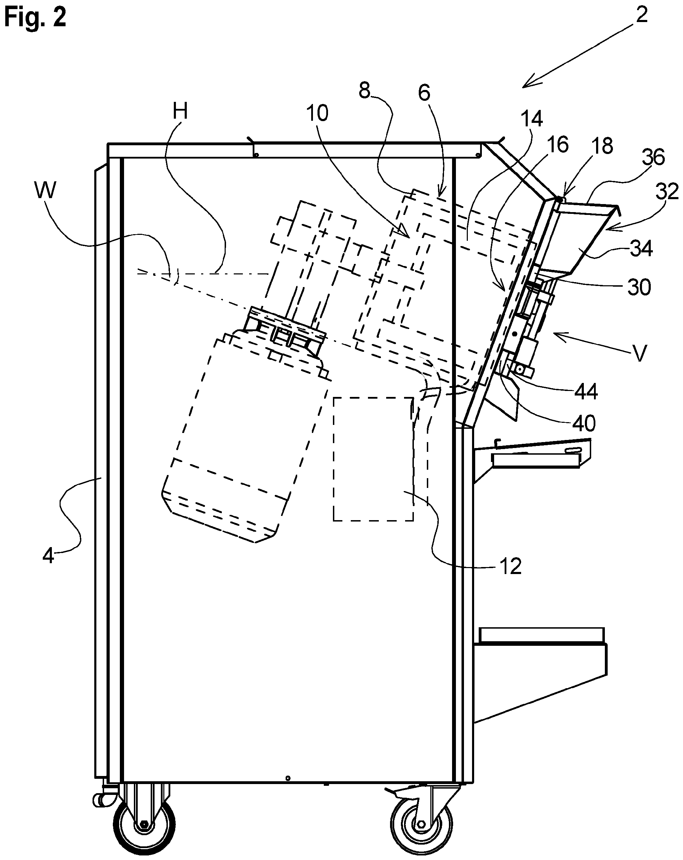

In den Figuren 1 und 2 ist eine beispielhafte Ausführungsform einer Vorrichtung 2 zum Herstellen eines fließfähigen Produktes, wie insbesondere Speiseeis, aus einem Ausgangsgemisch gezeigt. Die Vorrichtung 2 umfasst ein Vorrichtungsgehäuse 4, in dem ein zylindrischer Verarbeitungsbehälter 6 untergebracht ist. Wie insbesondere aus Figur 2 zu entnehmen ist, weist der Verarbeitungsbehälter 6 eine temperierbare Innenwandung 8 auf, die einen Innenraum 10 umschließt, in dem das zu bearbeitende Ausgangsgemisch aufgenommen wird. Die temperierbare Innenwandung 8 dient dabei zum Kühlen oder Erwärmen des aufgenommenen Ausgangsgemisches und ist hierzu mit einem ebenfalls im Vorrichtungsgehäuse 4 aufgenommenen Kompressor 12 und/oder einer Heizvorrichtung (nicht dargestellt) verbunden. Zudem ist in dem Innenraum 10 eine Rühreinrichtung 14 aufgenommen, mittels der das Ausgangsgemisch gerührt beziehungsweise durchmischt werden kann.

Der Verarbeitungsbehälter 6 weist ferner an seiner Vorderseite V eine Behälteröffnung 16 auf, die mit einer Behältertür 18 fluiddicht verschlossen werden kann. Die Behältertür 18 ist hierzu an der Vorderseite V des Vorrichtungsgehäuses 4 mittels eines auf der linken Seite der Behälteröffnung 16 angeordneten Scharnierelements 20 verschwenkbar gelagert. Dabei ist die Behältertür 18 zwischen einer gezeigten Schließposition, in welcher die Behälteröffnung 16 von der Behältertür 18 verschlossen ist, und einer Öffnungsposition verschwenkbar, in welcher der Innenraum 10 über die Behälteröffnung 16 zugänglich ist. An der vom Scharnierelement 20 abgewandten Seite der Behältertür 18 ist ferner eine Verriegelungseinrichtung 22 vorgesehen, mittels der die Behältertür 18 in der Schließposition verriegelt werden kann.

Wie aus Fig. 2 ferner zu entnehmen, ist der Verarbeitungsbehälter 6 im Vorrichtungsgehäuse 4 derart schräg gehalten, dass er sich zur Horizontalen H in einem Anstellwinkel W von 20 bis 50°, insbesondere von etwa 30° erstreckt. Durch diese schräge Anordnung des Verarbeitungsbehälters 6 ist auch die Behälteröffnung 16 schräg ausgerichtet. Zudem ist das Vorrichtungsgehäuse 4 im Bereich der Behälteröffnung 16 schräg und überhängend ausgebildet, so dass das hieran gehaltene Scharnierelement 20 eine Schwenkachse SA bildet, die senkrecht zum Anstellwinkel W gerichtet ist.

Damit das für die Herstellung des Produktes erforderliche Ausgangsgemisch, das insbesondere Bestandteile von Wasser, Milch, Sahne, Verdickungsmittel, Fruchtstücken, Fruchtkonzentrat, Vanille, Schokolade aufweist, in den Verarbeitungsbehälter 6 eingegeben werden kann, ist im oberen Bereich der Behältertür 18 eine Einfüllöffnung 30 eingelassen. An dieser Einfüllöffnung 30 ist eine Einfülleinrichtung 32 angeordnet, die einen von oben zugänglichen Einfülltrichter 34 aufweist, über den die Zutaten von außen in den Innenraum 10 des Verarbeitungsbehälters 6 gefüllt werden können und der über einen verschwenkbaren Deckel 36 geöffnet und verschlossen werden kann. Darüber hinaus ist oberhalb des Deckels 36 ein Bedienfeld 38 vorgesehen, das mit einer Rechnereinheit 42 verbunden ist und über das verschiedene Funktionen der Vorrichtung 2 gesteuert werden können.

Unterhalb der Einfülleinrichtung 32 ist an der Behältertür 18 ferner eine Auslassöffnung 40 für die Abgabe des fertigen Produktes eingelassen. Die Auslassöffnung 40 kann durch eine Verschlussplatte 44 fluiddicht verschlossen oder für einen Austritt des Produktes freigegeben werden.

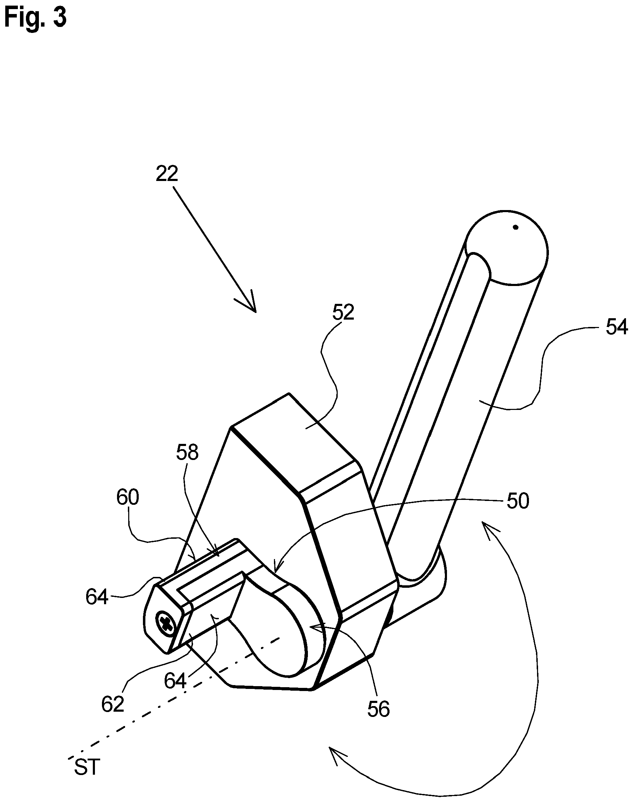

Wie insbesondere aus der vergrößerten Ansicht der in Figur 3 gezeigten Verriegelungseinrichtung 22 zu entnehmen ist, umfasst diese ein mit der Behältertür 18 in Anlage und außer Anlage bringbares Stellglied 50. Das Stellglied 50 ist dabei um eine Stellachse ST verschwenkbar an einem mit dem Vorrichtungsgehäuse 4 verbundenen Basisteil 52 gelagert. Um das Stellglied 50 in verschiedenen Positionen relativ zur Behältertür 18 verstellen zu können, ist eine damit wirkverbundene und manuell betätigbare Handhabe 54 vorgesehen. Die Handhabe 54 ist dabei auf der dem Stellglied 50 entgegengesetzten Seite des Basisteils 52 angeordnet und kann von einem Benutzer mittels einer vertikalen Schwenkbewegung verstellt werden.

Wie ferner aus der Fig. 3 ersichtlich ist, besteht das Stellglied 50 aus einem sich senkrecht zur Stellachse ST erstreckenden Trägerabschnitt 56 und einem an einem freien Ende des Trägerabschnittes 56 senkrecht abstehenden Exzenterabschnitt 58. Der Exzenterabschnitt 58 weist dabei einen ersten Kontaktbereich 60 und einen vom ersten Kontaktbereich 60 abgewandten zweiten Kontaktbereich 62 auf. Beide Kontaktbereiche 60, 62 können dabei wahlweise mit einer Außenseite der Behältertür 18 in Anlage gebracht werden, um diese in einer vorbestimmten Position zu halten. An beiden Kontaktbereiche 60, 62 ist dabei jeweils ein elastisches Kunststoffelement 64 austauschbar gehalten, um Beschädigungen und insbesondere Kratzspuren an der Behältertür zu vermeiden und in der Schließstellung eine Klemmkraft erzeugen zu können.

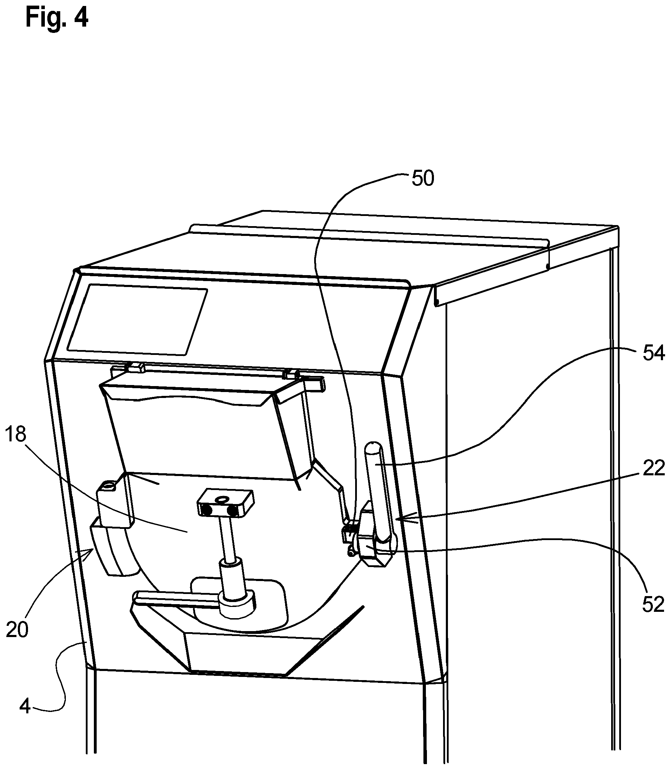

Die Funktionsweise der Verriegelungseinrichtung 22 und das Zusammenspiel mit der Behältertür 18 ist nachfolgend anhand der Figuren 4 bis 7 dargestellt:
In Fig. 4 ist die Verriegelungseinrichtung 22 in einer Verriegelungsstellung dargestellt. In dieser drückt das Stellglied 50 mit dem ersten Kontaktabschnitt 60 gegen die Außenseite der Behältertür 18, wobei das betreffende elastische Kunststoffelement 64 gegen die Behältertür 18 vorgespannt ist. In dieser Verriegelungsstellung der Verriegelungseinrichtung 22 ist die Behältertür 18 dadurch in der Schließposition positionsfest fixiert und die Behälteröffnung 16, insbesondere für die Dauer des Herstellungsprozesses, fluiddicht verschlossen.

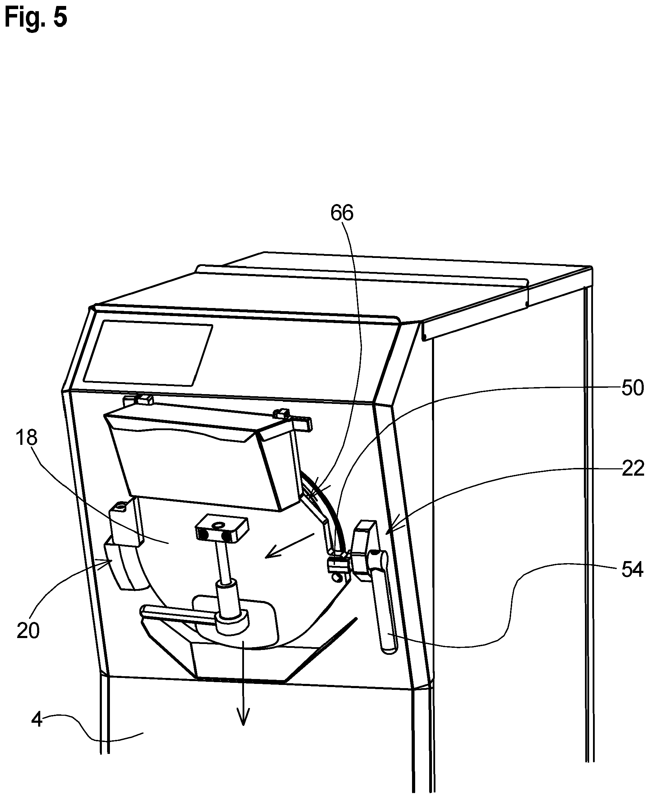

Aus der Verriegelungsstellung kann die Verriegelungseinrichtung 22 durch vertikales Verschwenken der Handhabe 54 in eine in Fig. 5 gezeigte Lüftungsstellung verlagert werden. Durch das Verschwenken der Handhabe 54 wird dabei gleichzeitig der Exzenterabschnitt 58 des Stellgliedes 50 um 180° verschwenkt, so dass nun der zweite Kontaktbereich 62 des Exzenterabschnittes 58 der Behältertür 18 zugewandt ist. Dabei ist der zweite Kontaktbereich 62 beabstandet zur Behälteröffnung 16 angeordnet. Aus der durch das Eigengewicht der Behältertür 18 erzeugten Schwerkraft FG resultiert aufgrund der schrägen Lagerung zudem eine in Schwenkrichtung wirkende Öffnungskraft FO, durch die die Behältertür 18 bis zur Anlage am zweiten Kontaktbereich 62 von der Behälteröffnung 16 selbsttätig weg geschwenkt wird.

Die mit dem zweiten Kontaktbereich 62 in Anlage stehende Behältertür 18 wird dadurch gegenüber der Behälteröffnung 16 beabstandet in einer Lüftungsposition gehalten, in der zwischen Behälteröffnung 16 und Behältertür 18 ein zur Belüftung beziehungsweise zur Luftzufuhr in den Innenraum 10 dienender Lüftungsschlitz 66 freigegeben ist. Über diesen Lüftungsschlitz 66, der an der breitesten Stelle vorzugsweise eine maximale Breite zwischen 2 und 20 cm aufweist, kann beispielsweise eine nach einem Herstellungs- oder Reinigungsvorgang im Verarbeitungsbehälter 6 verbliebene Restfeuchte verdunsten, so dass eine Schimmelbildung beziehungsweise eine Verunreinigung von nachfolgenden Produktionschargen vermieden werden kann.

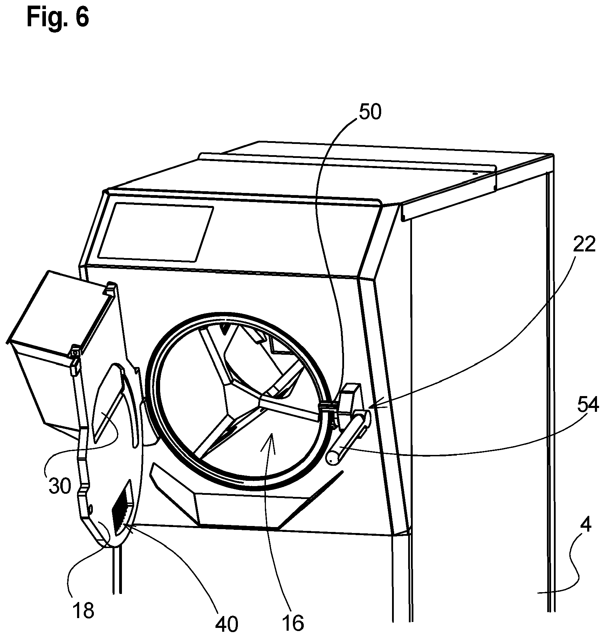

Neben der Verriegelungsstellung und der Lüftungsstellung ist die Verriegelungseinrichtung 22 durch ein weiteres Verschwenken der Handhabe 54 zusätzlich in die in Fig. 6 gezeigte Freigabestellung verlagerbar, in welcher sich das Stellglied 50 außerhalb des Schwenkbereichs der Behältertür 18 befindet. Aufgrund der oben beschriebenen, an der Behältertür 18 permanent angreifenden Öffnungskraft OF wir die Behältertür 18 hierbei an der Verriegelungseinrichtung 22 vorbei selbsttätig in eine Öffnungsstellung verlagert, in der sie die Behälteröffnung 16 frei zugänglich macht.

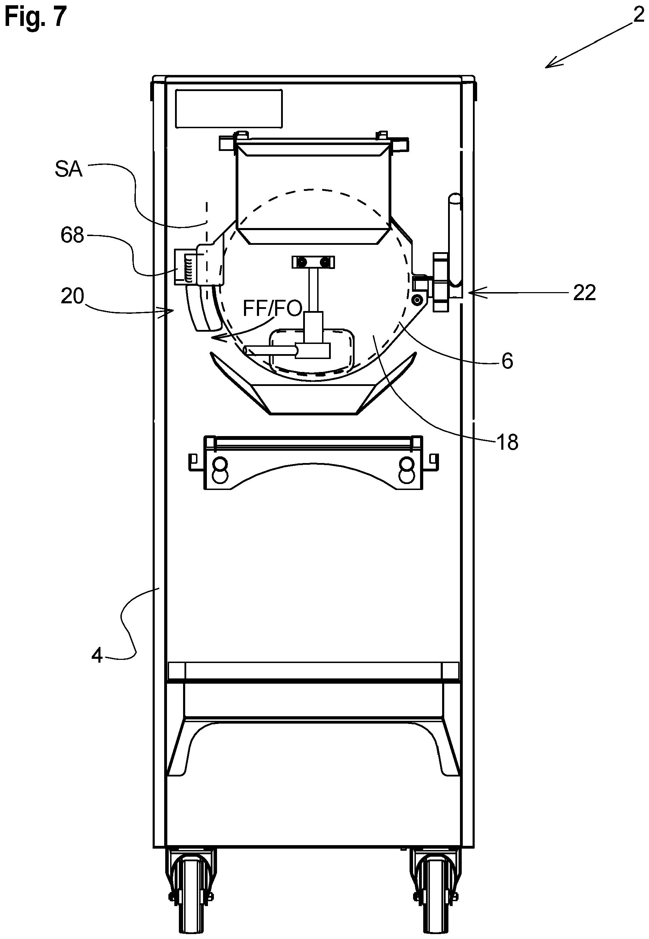

Figur 7 zeigt eine alternative Ausführungsform der Vorrichtung 2, bei der der Verarbeitungsbehälter 6 horizontal im Vorrichtungsgehäuse 4 aufgenommen ist und sowohl die Behältertür 18 als auch deren Schwenkachse SA sich jeweils vertikal erstrecken. Da bei dieser Ausführung der Vorrichtung 2 die Öffnungskraft FO nicht durch das Eigengewicht der nun horizontal verschwenkbar gelagerten Behältertür 18 erzeugt werden kann, ist zwischen Behältertür 18 und Vorrichtungsgehäuse 4 eine Federeinrichtung 68 vorgesehen. Diese erzeugt in der Schließposition der Behältertür 18 durch Vorspannung eine Federkraft FF beziehungsweise ein Moment, das die Behältertür 18 als Öffnungskraft FO von der Behälteröffnung weg beaufschlagt. Die Federeinrichtung 68 kann hierzu, wie dargestellt, beispielsweise am Scharnierelement 20 angreifen beziehungsweise in diese integriert sein. Eine solche Federeinrichtung 68 kann unabhängig von der Ausrichtung des Verarbeitungsbehälters 6 zudem auch in der Ausführungsform der Vorrichtung 2 gemäß der Figuren 1 bis 6 vorgesehen werden.

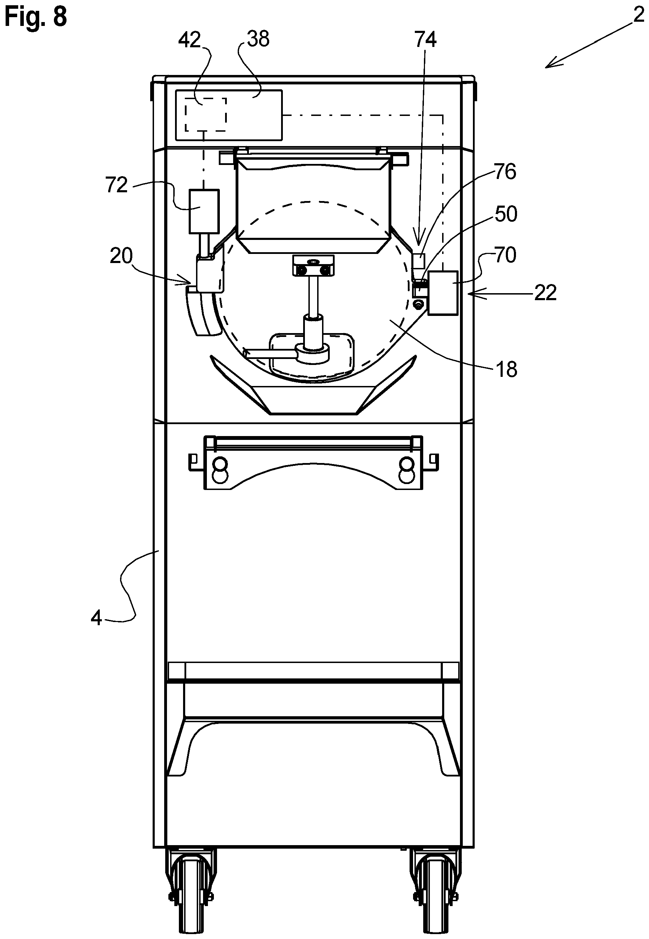

Figur 8 zeigt eine weitere alternative Ausführungsform der Vorrichtung 2, bei der, unabhängig von der Ausrichtung des Verarbeitungsbehälters 6, im Unterschied zur Vorrichtung 2 gemäß der Figuren 1 bis 7 das Stellglied 50 mittels einer elektrischen Stelleinrichtung 70 verstellbar ist. Die elektrische Stelleinrichtung 70 ermöglicht dabei eine zumindest teilautomatisierte Verlagerung des Stellgliedes 50 zwischen der Verriegelungsstellung, der Lüftungsstellung und der Freigabestellung.

Alternativ oder zusätzlich hierzu kann zudem auch die Behältertür 18 durch eine elektrische Schwenkeinrichtung 72 verstellbar sein. Hierzu wird die elektrische Schwenkeinrichtung 72 beispielsweise am Scharnierelement 20 derart integriert, dass diese teil- oder vollautomatisch zwischen der Schließ-, Lüftungs- und Öffnungsposition verschwenkt werden kann.

Zur Steuerung sind die elektrischen Einrichtungen 70, 72 beispielsweise über Kabel oder per Funk mit dem Bedienfeld 38 beziehungsweise mit der Rechnereinheit 42 verbunden.

Darüber hinaus ist an der Einfüllöffnung 30 eine Sicherheitssensorik 74 mit wenigstens einem optischen und/oder taktilen Sicherheitssensor 76 vorgesehen. Der wenigstens eine Sicherheitssensor 76 ist dabei derart ausgebildet und angeordnet, dass ein zwischen der Behälteröffnung 16 und der Behältertür 18 angeordnetes Objekt detektiert und ferner ein Signal an den Benutzer oder an die mit dem Bedienfeld 28 verbundene Rechnereinheit 42 weitergegeben werden kann. In Abhängigkeit dieses Signals kann dann beispielsweise zumindest eine der beiden elektrischen Einrichtungen 70, 72 blockiert werden, um eine Verletzung eines Benutzers oder eine Beschädigung der Vorrichtung 2 zu vermeiden.

## Patentansprüche

1. Vorrichtung (2) zur Herstellung eines fließfähigen Produktes, insbesondere von Speiseeis, aus einem Ausgangsgemisch umfassend
einen in einem Vorrichtungsgehäuse (4) vorgesehenen Verarbeitungsbehälter (6) mit einer temperierbaren Innenwandung (8), die einen zur Aufnahme des Ausgangsgemisches geeigneten Innenraum (10) umschließt, in dem eine Rühreinrichtung (14) vorgesehen und der über eine Behälteröffnung (16) zugänglich ist,
eine an dem Vorrichtungsgehäuse (4) verlagerbar gehaltene Behältertür (18), die zwischen einer Schließposition, in welcher die Behälteröffnung (16) verschlossen ist, und einer Öffnungsposition verschwenkbar ist, in welcher der Innenraum (10) über die Behälteröffnung (16) zugänglich ist,
und eine Verriegelungseinrichtung (22), die zwischen einer Verriegelungsstellung, in welcher die Behältertür (18) mittels der Verriegelungseinrichtung (22) in der Schließposition positionsfest fixiert ist, und einer Freigabestellung verstellbar ist, in welcher die Behältertür (18) zwischen der Schließposition und der Öffnungsposition verschwenkbar ist,
**dadurch gekennzeichnet, dass** die Verriegelungseinrichtung (22) zusätzlich zur Verriegelungsstellung und Freigabestellung in eine Lüftungsstellung verstellbar ist, in welcher die Behältertür (18) mittels der Verriegelungseinrichtung (22) beabstandet gegenüber der Behälteröffnung (16) in einer vorbestimmten Lüftungsposition gehalten ist und einen Lüftungsschlitz (66) zur Belüftung des Innenraums (10) über die Behälteröffnung (16) freigibt.

2. Vorrichtung nach Anspruch 1, **dadurch gekennzeichnet, dass** der Lüftungsschlitz (66) in der Lüftungsposition der Behältertür (18) eine maximale Breite zwischen 2 cm und 20 cm aufweist.

3. Vorrichtung nach Anspruch 1 oder 2, **dadurch gekennzeichnet, dass** die Verriegelungseinrichtung (22) ein verstellbares Stellglied (50) aufweist, das in der Verriegelungsstellung unter Zwischenlage der Behältertür (18) eine gegen das Vorrichtungsgehäuse (4) gerichtete Klemmkraft bewirkt, in der Freigabestellung aus dem Schwenkbereich der Behältertür (18) entfernt ist und in der Lüftungsstellung einen Lüftungsanschlag bildet, an den die Behältertür (18) beabstandet zur Behälteröffnung (16) anlegbar ist.

4. Vorrichtung nach Anspruch 3, **dadurch gekennzeichnet, dass** das Stellglied (50) mittels einer Handhabe (54) um eine Stellachse (ST) verschwenkbar ist.

5. Vorrichtung nach Anspruch 3 oder 4, **dadurch gekennzeichnet, dass** das Stellglied (50) einen Exzenterabschnitt (58) mit einem ersten Kontaktbereich (60) und einen vom ersten Kontaktbereich (60) abgewandten zweiten Kontaktbereich (62) aufweist, wobei in der Verriegelungsstellung der erste Kontaktbereich (60) und in der Lüftungsstellung der zweite Kontaktbereich (62) mit der Behältertür (18) in Anlage bringbar ist.

6. Vorrichtung nach Anspruch 5, **dadurch gekennzeichnet, dass** der erste Kontaktbereich (60) und/oder der zweite Kontaktbereich (62) wenigstens abschnittsweise aus einem Kunststoffmaterial gebildet ist.

7. Vorrichtung nach einem der Ansprüche 1 bis 6, **dadurch gekennzeichnet, dass** die Behältertür (18) durch eine Öffnungskraft (FO) von der Behälteröffnung (16) weg beaufschlagt ist.

8. Vorrichtung nach Anspruch 7, **dadurch gekennzeichnet, dass** sich der Verarbeitungsbehälter (6) von der Behälteröffnung (16) weg entgegen der Gravitationsrichtung (G) in einem Anstellwinkel (W) schräg nach oben erstreckt und die Behältertür (18) an dem Vorrichtungsgehäuse (4) mittels eines Scharnierelements (20) verschwenkbar gelagert ist, das eine Schwenkachse (SA) definiert, die im Wesentlichen senkrecht zum Anstellwinkel (W) gerichtet ist und die Öffnungskraft (FO) somit durch die Schwerkraft (FG) der Behältertür (18) erzeugbar ist.

9. Vorrichtung nach Anspruch 7 oder 8, **dadurch gekennzeichnet, dass** die Öffnungskraft (FO) durch eine Federkraft (FF) einer Federeinrichtung (68) gebildet ist, die die Behältertür in die Offenstellung vorspannt.

10. Vorrichtung nach einem der Ansprüche 1 bis 9, **dadurch gekennzeichnet, dass** die Verriegelungseinrichtung (22) mittels einer elektrischen Stelleinrichtung (70) zwischen der Verriegelungsstellung, der Freigabestellung und der Lüftungsstellung verstellbar ist.

11. Vorrichtung nach einem der Ansprüche 1 bis 10, **dadurch gekennzeichnet, dass** die Behältertür (18) mittels einer elektrischen Schwenkeinrichtung (72) zwischen der Schließposition und der Öffnungsposition verstellbar ist.

12. Vorrichtung nach Anspruch 10 oder 11, **dadurch gekennzeichnet, dass** wenigsten eine der beiden elektrischen Einrichtungen (70, 72) mittels eines damit verbundenen Bedienfeldes (38) steuerbar ist.

13. Vorrichtung nach einem der Ansprüche 10 bis 12, **dadurch gekennzeichnet, dass** zwischen der Behältertür (18) und dem Vorrichtungsgehäuse (4) wenigstens eine Sicherheitssensorik (74) vorgesehen ist, mittels der ein Objekt (O) im Schwenkbereich der Behältertür (18) detektierbar ist.

14. Vorrichtung nach Anspruch 13, **dadurch gekennzeichnet, dass** wenigstens eine der beiden elektrischen Einrichtungen (70; 72) in Abhängigkeit eines Signals der Sicherheitssensorik selbsttätig blockierbar.

## Claims

1. Device (2) for producing a flowable product, in particular ice cream, from a starting mixture, comprising
a processing container (6) provided in a device housing (4) with a temperature-controllable inner wall (8) which encloses an inner space (10) suitable for receiving the starting mixture, in which a stirring apparatus (14) is provided and which is accessible via a container opening (16),
a container door (18) displaceably held on the device housing (4), which is pivotable between a closed position, in which the container opening (16) is closed, and an open position, in which the inner space (10) is accessible via the container opening (16),
and a locking apparatus (22) which can be adjusted between a locking position, in which the container door (18) is positionally fixed in the closed position by means of the locking apparatus (22), and a release position, in which the container door (18) is pivotable between the closed position and the open position,
**characterised in that** the locking apparatus (22), in addition to the locking position and release position, is adjustable to a ventilation position in which the container door (18) is held at a distance from the container opening (16) in a predetermined ventilation position and releases a ventilation slot (66) for ventilation of the inner space (10) via the container opening (16).

2. Device according to claim 1, **characterised in that** the ventilation slot (66) has a maximum width between 2 cm and 20 cm in the ventilation position of the container door (18).

3. Device according to claim 1 or 2, **characterised in that** the locking apparatus (22) has an adjustable actuating member (50) which, in the locking position, with the container door (18) interposed, produces a clamping force directed against the device housing (4), is removed from the pivoting range of the container door (18) in the release position and forms a ventilation stop in the ventilation position, against which the container door (18) can be placed at a distance from the container opening (16).

4. Device according to claim 3, **characterised in that** the actuating member (50) is pivotable about an adjusting axis (ST) by means of a handle (54).

5. Device according to claim 3 or 4, **characterised in that** the actuating member (50) has an eccentric portion (58) with a first contact area (60) and a second contact area (62) facing away from the first contact area (60), wherein in the locking position the first contact area (60) and in the ventilation position the second contact area (62) can be placed against the container door (18).

6. Device according to claim 5, **characterised in that** the first contact area (60) and/or the second contact area (62) is formed from a plastic material at least in sections.

7. Device according to any one of claims 1 to 6, **characterised in that** the container door (18) is loaded away from the container opening (16) by an opening force (FO).

8. Device according to claim 7, **characterised in that** the processing container (6) extends obliquely upwards away from the container opening (16) against the direction of gravity (G) at an angle of incidence (W) and the container door (18) is pivotably supported at the device housing (4) by means of a hinge element (20) which defines a pivot axis (SA) that is essentially perpendicular to the angle of incidence (W) and the opening force (FO) can thus be generated by the force of gravity (FG) of the container door (18).

9. Device according to claim 7 or 8, **characterised in that** the opening force (FO) is formed by a spring force (FF) of a spring apparatus (68) which biases the container door into the open position.

10. Device according to any one of claims 1 to 9, **characterised in that** the locking apparatus (22) is adjustable by means of an electric actuating apparatus (70) between the locking position, the release position and the ventilation position.

11. Device according to any one of claims 1 to 10, **characterised in that** the container door (18) is adjustable by means of an electric pivoting apparatus (72) between the closed position and the open position.

12. Device according to claim 10 or 11, **characterised in that** at least one of the two electrical apparatuses (70, 72) can be controlled by means of a control panel (38) connected thereto.

13. Device according to any one of claims 10 to 12, **characterised in that** at least one safety sensor system (74) is provided between the container door (18) and the device housing (4), by means of which an object (O) in the pivoting range of the container door (18) can be detected.

14. Device according to claim 13, **characterised in that** at least one of the two electrical apparatuses (70; 72) can be automatically blocked in dependence on a signal from the safety sensor system.

## Revendications

1. Dispositif (2) de fabrication d'un produit fluide, en particulier de crème glacée, à partir d'un mélange de départ comprenant
un récipient de traitement (6) prévu dans un boîtier de dispositif (4) avec une paroi intérieure (8) pouvant être mise en température qui entoure un espace intérieur (10) approprié à la réception du mélange de départ, espace dans lequel un dispositif d'agitation (14) est prévu et qui est accessible par le biais d'une ouverture de récipient (16),
une porte de récipient (18) maintenue de manière déplaçable au niveau du boîtier de dispositif (4), qui est pivotante entre une position de fermeture, dans laquelle l'ouverture de récipient (16) est fermée, et une position d'ouverture, dans laquelle l'espace intérieur (10) est accessible par le biais de l'ouverture de récipient (16),
et un dispositif de verrouillage (22) qui est réglable entre une position de verrouillage, dans laquelle la porte de récipient (18) est fixée en position au moyen du dispositif de verrouillage (22) dans la position de fermeture, et une position de libération dans laquelle la porte de récipient (18) peut pivoter entre la position de fermeture et la position d'ouverture,
**caractérisé en ce que** le dispositif de verrouillage (22) est réglable, en plus de la position de verrouillage et la position de libération, dans une position de ventilation dans laquelle la porte de récipient (18) est maintenue au moyen du dispositif de verrouillage (22) à distance par rapport à l'ouverture de récipient (16) dans une position de ventilation prédéterminée et libère une fente de ventilation (66) pour la ventilation de l'espace intérieur (10) par le biais de l'ouverture de récipient (16).

2. Dispositif selon la revendication 1, **caractérisé en ce que** la fente de ventilation (66) dans la position de ventilation de la porte de récipient (18) présente une largeur maximale entre 2 cm et 20 cm.

3. Dispositif selon la revendication 1 ou 2, **caractérisé en ce que** le dispositif de verrouillage (22) présente un actionneur (50) réglable qui provoque, dans la position de verrouillage, en intercalant la porte de récipient (18), une force de serrage dirigée contre le boîtier de dispositif (4), est retiré de la zone de pivotement de la porte de récipient (18) dans la position de libération et forme dans la position de ventilation une butée de ventilation contre laquelle la porte de récipient (18) peut être placée à distance de l'ouverture de récipient (16).

4. Dispositif selon la revendication 3, **caractérisé en ce que** l'actionneur (50) peut pivoter autour d'un axe de réglage (ST) au moyen d'une poignée (54).

5. Dispositif selon la revendication 3 ou 4, **caractérisé en ce que** l'actionneur (50) présente une section d'excentrique (58) avec une première zone de contact (60) et une seconde zone de contact (62) éloignée de la première zone de contact (60), dans lequel la première zone de contact (60), dans la position de verrouillage, et la seconde zone de contact (62), dans la position de ventilation, peuvent être amenées en appui avec la porte de récipient (18).

6. Dispositif selon la revendication 5, **caractérisé en ce que** la première zone de contact (60) et/ou la seconde zone de contact (62) est formée au moins par sections d'un matériau plastique.

7. Dispositif selon l'une quelconque des revendications 1 à 6, **caractérisé en ce que** la porte de récipient (18) subit une force d'ouverture (FO) éloignée de l'ouverture de récipient (16).

8. Dispositif selon la revendication 7, **caractérisé en ce que** le récipient de traitement (6) s'étend loin de l'ouverture de récipient (16), en biais vers le haut dans le sens inverse au sens de gravitation (G) dans un angle d'attaque (W) et la porte de récipient (18) est logée de manière pivotante au niveau du boîtier de dispositif (4) au moyen d'un élément de charnière (20) qui définit un axe de pivotement (SA) qui est dirigé sensiblement perpendiculairement à l'angle d'attaque (W), et la force d'ouverture (FO) peut ainsi être générée par la force de gravité (FG) de la porte de récipient (18).

9. Dispositif selon la revendication 7 ou 8, **caractérisé en ce que** la force d'ouverture (FO) est formée par une force de ressort (FF) d'un dispositif de ressort (68) qui précontraint la porte de récipient dans la position ouverte.

10. Dispositif selon l'une quelconque des revendications 1 à 9, **caractérisé en ce que** le dispositif de verrouillage (22) est réglable entre la position de verrouillage, la position de libération et la position de ventilation au moyen d'un dispositif de réglage (70) électrique.

11. Dispositif selon l'une quelconque des revendications 1 à 10, **caractérisé en ce que** la porte de récipient (18) est réglable entre la position de fermeture et la position d'ouverture au moyen d'un dispositif de pivotement (72) électrique.

12. Dispositif selon la revendication 10 ou 11, **caractérisé en ce qu'**au moins un des deux dispositifs électriques (70, 72) peut être commandé au moyen d'un panneau de commande (38) relié à celui-ci.

13. Dispositif selon l'une quelconque des revendications 10 à 12, **caractérisé en ce qu'**au moins un capteur (74) est prévu entre la porte de récipient (18) et le boîtier de dispositif (4), capteur de sécurité au moyen duquel un objet (O) peut être détecté dans la zone de pivotement de la porte de récipient (18).

14. Dispositif selon la revendication 13, **caractérisé en ce qu'**au moins un des deux dispositifs électriques (70 ; 72) peut être bloqué automatiquement en fonction d'un signal du capteur de sécurité.
